# EUROPEAN PATENT SPECIFICATION

(11) **EP 2 133 220 B1**
(45) Date of publication and mention of the grant of the patent: **10.08.2011**
(21) Application number: 09162559.0
(22) Date of filing: 12.06.2009
(51) Int. Cl.: B60C 25/05

(54) **Apparatus for lifting and positioning vehicle wheels**
Hebe- und Positioniervorrichtung für Fahrzeugräder
Dispositif pour élever et postionner des roues d'un véhicule

(30) Priority: 13.06.2008 IT MO20080175
(43) Date of publication of application: 16.12.2009
(73) Proprietor: M&B Engineering S.r.l., 42015 Correggio (RE) (IT)
(72) Inventor: Magnani, Franco, I-42015, Correggio (RE) (IT)
(74) Representative: Burrows, Anthony Gregory

(56) References cited:
- EP-A- 0 032 759
- EP-A- 1 253 026
- EP-A- 1 982 851
- EP-A- 2 062 753
- US-A- 2 903 049
- US-A1- 2007 144 681

## Description

The present invention relates to an apparatus for lifting and positioning vehicle wheels, usable in particular to lift and position a wheel on a machine suitable for fitting and removing tyres.

As is known, traditional wheels are available in different sizes, depending on the type of vehicle on which they are to be used, and consist of a metal rim onto which is fitted a flexible tyre.

More specifically, the metal rim has a tyre housing seat, delimited by surrounding protrusions suitable for securing the beads of the tyre itself.

Tyre repair and changing are done by appointed operators, inside garages or the like, and the removal and fitting of a tyre from/onto a metal rim are done using special machines, commonly known as "tyre changers".

The tyre changers of known type generally comprise a carrying structure and a device for gripping the rim of a wheel, which can be of the type of a plate with suitable rim locking clamps and associated with the structure turnable around a vertical axis.

The carrying structure also supports one or more small arms equipped with tools usable for fitting and removing the wheel tyre.

The known machines do however have a number of drawbacks.

It is known, in fact, that the grip device is positioned at a height off the ground such as to make it easier for an operator to access the wheel during tyre removal and fitting operations.

For this reason, the operator must lift the wheel off the ground to position it horizontally and perfectly centred on the grip device and, after the tyre fitting and/or removal operations, must once again place it on the ground.

Lifting the wheel off the ground and positioning it on the ground are normally done manually by the operator and, consequently, call for a fair amount of physical effort, above all considering the fact that the tyre fitting and removal operations are usually repeated several times, for several wheels, during the course of a day.

To overcome this drawback the use is known of tyre changers with a special apparatus for lifting the wheels off the ground and for positioning the wheels on the ground.

In a first known solution, such apparatus comprises a frame associated with the machine carrying structure and turnable by operating one or more actuators between a lowered position in which it is arranged resting on or near the ground and it is substantially vertical, and a raised position, in which it is arranged at the height of the grip device and it is substantially horizontal.

The operator positions the wheel vertically on the turnable frame in the lowered position and, subsequently, moves the frame to the raised position, thereby arranging the wheel horizontally at the height of the grip device.

The operator then moves the wheel manually onto the grip device, centres and locks the rim on the securing clamps.

After performing the removal and fitting operations of the tyre from/to the rim, the operator again moves the wheel on the frame for positioning on the ground. Furthermore, the apparatus can comprise several frames kinematically coupled together and suitable for lifting and facilitating the positioning of the wheel close to the grip device.

Tyre changers of this type are disclosed in EP 1253026, US 2903049, US 2007/144681 and EP 0032759.

More particularly, each of these documents discloses a tyre removal machine that comprises a supporting structure and lifting and rotation means according to the preamble of claim 1, which are associated to the supporting structure and suitable for moving the wheel between a first position, in which the wheel is arranged substantially vertical close to the ground, and a second position in which the wheel is arranged substantially horizontal close to fastening means. The lifting and rotation means comprise grip means suitable for gripping the wheel during the movement between the first and the second position. More particularly, the lifting and rotation means disclosed in each one of the patent documents above cited comprise rotation means for rotating the grip means around a horizontal axis. In particular, in a second known solution, the apparatus comprises a horizontal frame extending around the grip device and which is mobile along a vertical direction by operation of an actuator; a second frame is hinged to the horizontal frame and is turnable by operation of an actuator between a first lowered position, in which it is arranged substantially vertical near the ground, and a second raised position, in which it is coplanar with the horizontal frame.

In this case, after lifting and arranging the wheel horizontally by means of the turnable frame, the operator drags the wheel on the horizontal frame, which is then lowered by operation of the actuator until the wheel is positioned on the grip device.

These known machines are not however without drawbacks.

Though simplifying the operations of lifting off the ground, centring the rim on the grip device and positioning the wheel on the ground, such machines nevertheless require the manual dragging of the wheel from the turnable frame towards the grip device.

In this case as well therefore, physical effort is called for on the part of the operator, which is quite considerable if repeated several time during the course of a day, especially for large-size wheels.

The main aim of the present invention is to provide an apparatus for lifting and positioning vehicle wheels, usable in particular in machines for fitting and removing tyres, that allows reducing to the utmost the physical effort of an operator during the tyre fitting and removal operations to/from the rim of a wheel.

Another object of the present invention is to provide an apparatus for lifting and positioning vehicle wheels that makes it easier to centre the wheel rim on the grip device of a machine for fitting and removing tyres.

Another object of the present invention is to provide an apparatus for lifting and positioning vehicle wheels, usable in particular in machines for fitting and removing tyres that can be used indifferently for wheels of different sizes.

A further object of the present invention is to provide an apparatus for lifting and positioning vehicle wheels, usable in particular in machines for fitting and removing tyres, which permits overcoming the mentioned drawbacks of the background art in the ambit of a simple, rational, easy, effective to use and low cost solution.

The above objects are achieved by the present apparatus for lifting and positioning vehicle wheels, usable in particular in machines for fitting and removing tyres, comprising a supporting structure and lifting and rotation means for lifting and rotating a wheel which are associated with said supporting structure and suitable for moving said wheel between a first position, in which said wheel is arranged substantially vertical close to the ground, and a second position in which said wheel is arranged substantially horizontal close to the fastening means of a machine for fitting and removing tyres, characterized in that said lifting and rotation means comprise grip means suitable for gripping said wheel and securing it during the movement between said first position and said second position.

Other characteristics and advantages of the present invention will become more evident from the description of a preferred, but not sole, embodiment of an apparatus for lifting and positioning vehicle wheels, usable in particular in machines for fitting and removing tyres, illustrated purely as an example but not limited to the annexed drawings in which: figures from 1 to 6 are axonometric views showing the different stages of the loading of a wheel onto the fastening means of a machine for fitting and removing tyres, made with the apparatus according to the invention.

With particular reference to such figures, by 1 is globally indicated an apparatus for lifting and positioning vehicle wheels, usable in particular to lift and position a wheel onto the fastening means of a conventional machine suitable for fitting and removing tyres.

In particular, in the present description, reference is made to the use of the apparatus 1 in so-called "tyre changers" of the type of the machine shown by way of example in the above illustrations and generally indicated by the reference A. Furthermore by the expression "fastening means", reference is made to the turnable fastening devices commonly found on tyre changers, of the type of the plate with rim locking clamps shown by way of example in the illustrations and indicated by the reference B.

The machine A also comprises a carrying frame extending substantially vertically and which has a base C supporting the fastening means B and an upright D supporting at least a tool E suitable for fitting and/or removing tyres. The apparatus 1 comprises a supporting structure 2, composed of an upright extending vertically from the ground and which, if necessary, can be fixed integral with the carrying frame of the machine A.

Other embodiments of the supporting structure 2 cannot however be ruled out.

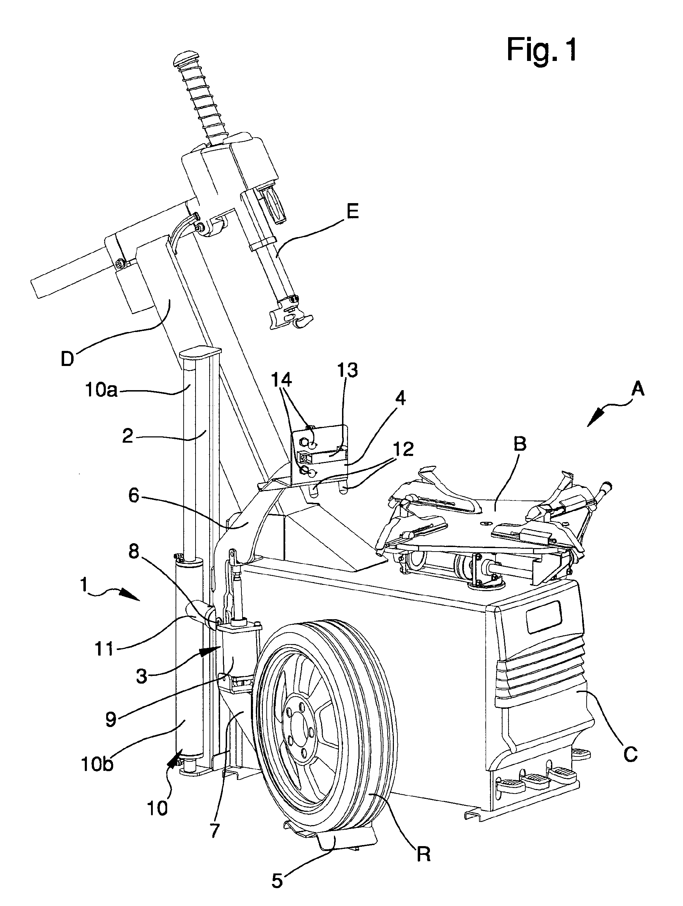

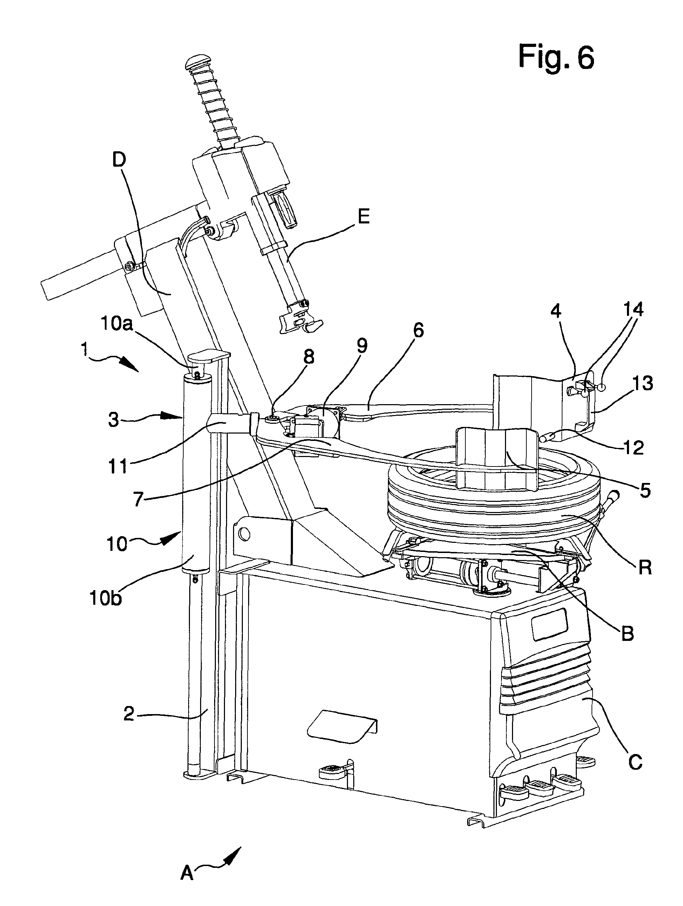

Lifting and rotation means for lifting and rotating a wheel R are supported by the upright 2 and are suitable for moving the wheel R between a first position, in which it is arranged substantially vertically close to the ground (figure 1), and a second position, in which it is arranged substantially horizontally on the fastening means B (figure 6), with the rotation axis of the rim centred on the rotation axis of the fastening means B.

Advantageously, the lifting and rotation means comprise grip means, generally indicated in the illustrations by the reference 3, suitable for gripping and securing the wheel R during the movement between the above first and second positions.

In particular, the grip means 3 comprise a first stop element 4 and a second stop element 5 that can be moved closer together and which are suitable for being placed in contact with substantially opposite portions of the tread of the tyre of the wheel R.

With not-sole reference to the particular embodiment of the apparatus 1 shown in the illustrations, the first and the second stop elements 4 and 5 are composed of a first and a second plate, both having respective contact surfaces positionable on substantially opposite portions of the tread of the tyre of the wheel R.

The grip means 3 comprise a first and a second arm 6 and 7 which extend from the supporting structure 2, which have an extremity associated with the supporting structure 2 and the respective opposite extremities having the first and the second plates 4 and 5.

The first arm 6, in particular, has an extremity associated turnable at a hinging point 8 on the second arm 7. The rotation of the first arm 6 with respect to the second arm 7 permits the movement of the first plate 4 closer to and away from the second plate 5.

Usefully, the grip means 3 comprise actuator means 9 to automate the rotation of the first arm 6 with respect to the second arm 7. In particular, the actuator means 9 are composed of a first actuator device, of the type of a linear actuator, having an extremity hinged to the first arm and an opposite extremity hinged to the second arm 7.

The lifting and rotation means comprise movement means 10 for moving the grip means 3 along a substantially vertical direction.

In particular, the movement means 10 are composed of a second actuator device 10, of the type of a linear actuator, having a fixed portion 10a associated with the upright 2 and arranged substantially vertical, and a moving portion 10b for supporting the grip means 3 and sliding on the fixed portion 10a.

The second actuator device 10 allows the movement of the grip means 3 along the above substantially vertical direction, between a lowered position, in which at least one between the first and the second plates 4 and 5 is arranged close to the ground (figures 1 and 2), and a raised position, in which the first and the second plates 4 and 5 are arranged substantially at the height of the fastening means B of the machine A (figures 3, 4, 5 and 6).

Advantageously, the lifting and rotation means comprise first rotation means 11 for rotating the grip means 3 around a substantially horizontal axis.

With particular reference to the embodiment of the apparatus 1 shown in the illustrations, the first rotation means 11 are composed of a turnable joint fixed to the moving portion 10b of the second actuator device 10 and supporting the first and the second arms 6 and 7.

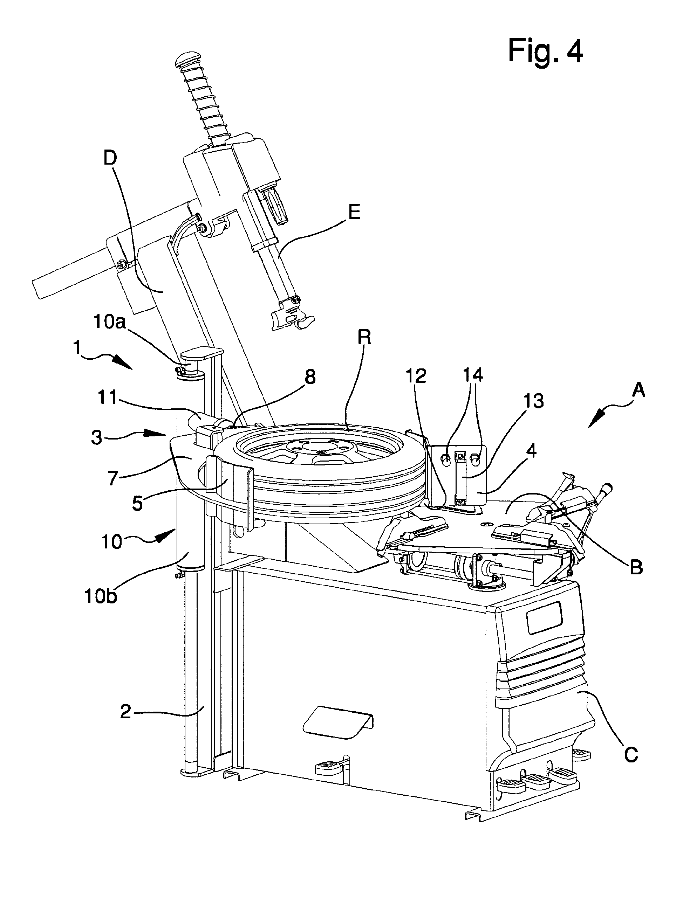

The turnable joint 11 allows the rotation of the grip means 3 between a first configuration, in which the first and the second plates 4 and 5 are aligned on a substantially vertical plane (figures 1, 2 and 3), and a second configuration, in which the first and the second plates 4 and 5 are aligned on a substantially horizontal plane (figures 4, 5 and 6).

Different embodiments of the first rotation means 11 cannot however be ruled out that envisage, for example, the use of one or more actuator devices suitable for automating the rotation of the grip means 3 around the horizontal axis. Usefully, the first and the second plates 4 and 5 both have a pair of protruding elements 12, close to a section of the edge, which extend substantially at right angles with respect to the contact surface positionable on the tread of the wheel R.

The protruding elements 12 are suitable for ensuring the wheel R is better locked when this is arranged horizontally. In particular, when the grip means 3 are in the above second configuration and the wheel R is therefore horizontal, the protruding elements 12 are arranged below the wheel R, in contact with the side portions of the tyre.

Advantageously, the lifting and rotation means comprise second rotation means for rotating the grip means 3 around a substantially vertical axis, suitable for allowing the first and the second plates 4 and 5 to be moved closer to or away from the fastening means B of the machine A.

In particular, such rotation around a vertical axis allows moving the wheel R, more specifically the rim of the wheel R, to a perfectly centred position with respect to the rotation axis of the fastening means B of the machine A, so as to simplify subsequent locking by means of the specific clamps.

With reference to the particular embodiment of the apparatus 1 shown in the illustrations, such second rotation means are composed of the same second actuator device 10, which is associated with the axially turnable upright 2. Different embodiments of the second rotation means cannot however be ruled out which envisage, e.g., the use of one or more actuator devices suitable for automating the rotation of the grip means 3 around the vertical axis.

Usefully, the grip means 3 comprise a handle 13, defined at the first plate 4, which can be gripped by an operator during the operations of lifting and positioning the wheel R on the fastening means B and positioning the wheel R on the ground.

The apparatus 1 also comprises control commands 14, which can consist of one or more levers or buttons, and which are operatively associated with the first actuator device 9, with the second actuator device 10 and with any other actuator devices possibly used.

Usefully, the control commands 14 are arranged on the first plate 4, close to the handle 13, and are therefore easily accessible by the operator during wheel R movement operations.

The use of the apparatus 1 to lift and position wheels is described below.

The grip means 3 are initially arranged in the lowered position and the first and the second plates 4 and 5 are aligned with each other on a substantially vertical plane, are moved away from each other, and the second plate 5 is arranged resting on the ground (figure 1).

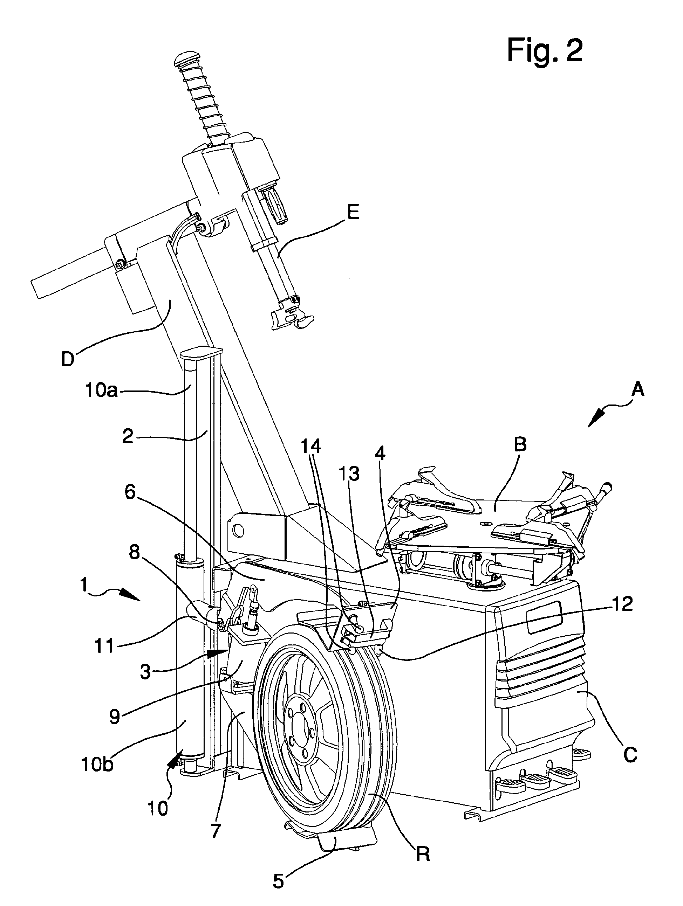

The operator positions the wheel R resting on the second plate 5 and operates the first actuator device 9 by means of the control commands 14, moving the contact surface of the first plate 4 onto the upper portion of the tyre of the wheel R, at the tread (figure 2).

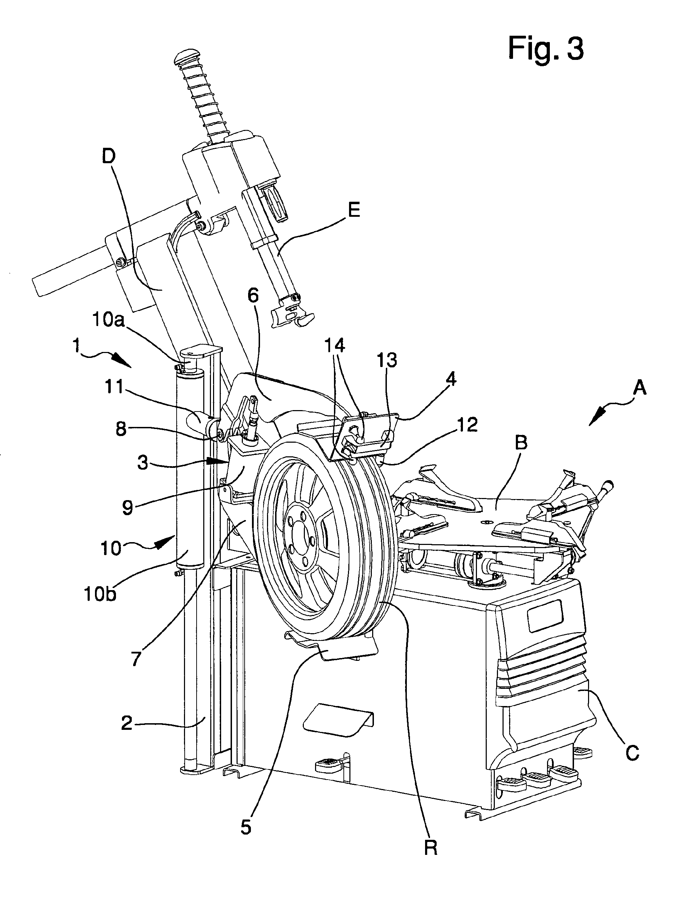

The wheel R is thus locked and, by means of the operation of the second actuator device 10, the operator moves the grip means 3 and consequently the wheel R to raised position (figure 3).

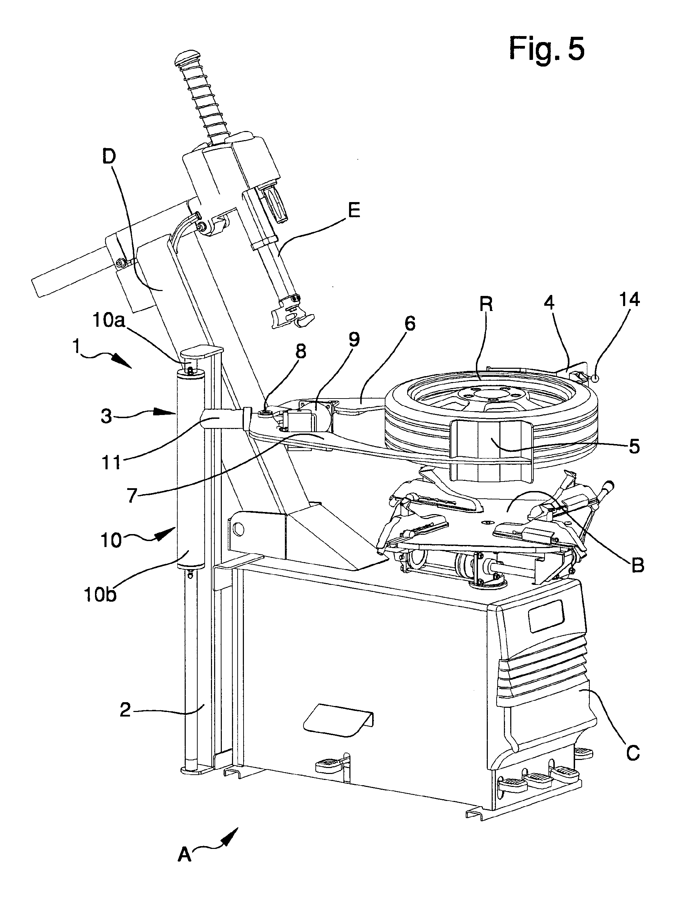

The operator now turns the grip means 3 around the horizontal rotation axis defined by the turnable joint 11, moving the wheel R to horizontal position (figure 4) and, subsequently, the axial rotation of the second actuator device 10 on the upright 2 allows positioning the wheel R above the fastening means B, in a perfectly centred position with respect to the rotation axis of the fastening means B (figure 5).

The operator then moves the wheel R until it rests on the fastening means B by operating the second actuator device 10, locks it by means of the clamps of the fastening means B and frees it from the first and from the second plates 4 and 5 by operating the first actuator device 9, by means of the control commands 14. Following the tyre removal and fitting operations, the operator returns the wheel R to the ground by means of the grip means 3, proceeding in the same way as described above.

It has in fact been ascertained how the described invention achieves the proposed objects and in particular the fact is underlined that the presence of the grip means allows reducing the physical effort of an operator to the utmost during the fitting and removal operations of a tyre to/from the rim of a wheel. Another advantage is that the rotation of the grip means around the vertical axis makes it much easier to position the wheel, in particular the wheel rim, in a position perfectly centred on the machine fastening means.

Furthermore, it appears evident how the presence of such grip means allows locking and moving wheels of different dimensions.

The invention thus conceived is susceptible to numerous modifications and variations, the materials used, as well as the contingent shapes and dimensions, may be any according to requirements without departing the protection scope of the appended claims.

## Claims

1. Apparatus (1) for lifting and positioning vehicle wheels, usable in particular in machines for fitting and removing tyres, comprising a supporting structure (2) and lifting and rotation means (3, 10, 11) for lifting and rotating a wheel (R) which are associated with said supporting structure (2) and suitable for moving said wheel (R) between a first position, in which said wheel (R) is arranged substantially vertical close to the ground, and a second position in which said wheel (R) is arranged substantially horizontal close to the fastening means (B) of a machine (A) for fitting and removing tyres, wherein said lifting and rotation means (3, 10, 11) comprise grip means (3) suitable for gripping said wheel (R) and securing it during the movement between said first position and said second position and comprise first rotation means (11) for rotating said grip means (3) around a substantially horizontal axis, **characterized in that** said lifting and rotation means (3, 10, 11) comprise second rotation means (10) for rotating said grip means (3) around a substantially vertical axis.

2. Apparatus (1) according to the claim 1, **characterized in that** said grip means (3) comprise at least a first stop element (4) and a second stop element (5) which are suitable for being placed in contact with substantially opposite portions of the tread of the tyre of said wheel (R).

3. Apparatus (1) according to claim 2, **characterized in that** at least one between said first and second stop elements (4, 5) moves closer to and away from the other of said first and second stop elements (4, 5).

4. Apparatus (1) according to claim 2 or 3, **characterized in that** said lifting and rotation means (3, 10, 11) comprise first rotation means (11) for rotating said first and second stop elements (4, 5) around a substantially horizontal axis, between a first configuration, in which the first and the second stop elements (4, 5) are arranged on a substantially vertical plane, and a second configuration, in which said first and the second stop elements (4, 5) are arranged on a substantially horizontal plane.

5. Apparatus (1) according to one or more of the claims from 2 to 4, **characterized in that** said lifting and rotation means (3, 10, 11) comprise second rotation means (10) for rotating said first and second stop elements (4, 5) around a substantially vertical axis, close or away with respect to said fastening means (B) of the machine (A) for fitting and removing tyres.

6. Apparatus (1) according to one or more of the preceding claims, **characterized in that** said lifting and rotation means (3, 10, 11) comprise movement means (10) for moving said grip means (3) along a substantially vertical direction.

7. Apparatus (1) according to one or more of the claims from 2 to 6, **characterized in that** said lifting and rotation means (3, 10, 11) comprise movement means (10) of said first and second stop elements (4, 5) along a substantially vertical direction, between a lowered position, in which at least one between said first and the second stop elements (4, 5) is arranged close to the ground, and a raised position, in which said first and said second stop elements (4, 5) are arranged substantially at the height of said fastening means (B) of the machine (A) for fitting and removing tyres.

8. Apparatus (1) according to one or more of the claims from 2 to 7, **characterized in that** said grip means (3) comprise at least an arm (6, 7) turnable around a hinging point (8) and with a free extremity having one between said first and second stop elements (4, 5).

9. Apparatus (1) according to one or more of the claims from 2 to 8, **characterized in that** said grip means (3) comprise at least a pair of arms (6, 7) associated with said supporting structure (2) and with the free extremities having said first stop element (4) and said second stop element (5) respectively, at least one of said arms (6, 7) being turnable around a hinging point (8) for moving one of said first and second stop elements (4, 5) closer to and away from the other of said first and second stop elements (4, 5).

10. Apparatus (1) according to one or more of the claims from 2 to 9, **characterized in that** said grip means (3) comprise actuator means (9) for moving at least one of said first and second stop elements (4, 5) closer to and away from the other of said first and second stop elements (4, 5).

11. Apparatus (1) according to claim 10, **characterized in that** said actuator means (9) comprise at least a first actuator device (9) associated with at least one of said arms (6, 7).

12. Apparatus (1) according to one or more of the preceding claims, **characterized in that** said movement means (10) comprise at least a second actuator device (10) having a fixed portion (10a) associated with said supporting structure (2) and a moving portion (10b), integrally associated with said grip means (3) and sliding with respect to said fixed portion (10a) along said substantially vertical direction.

13. Apparatus (1) according to claim 12, **characterized in that** said second actuator device (10) is axially turnable with respect to said supporting structure (2) around said substantially vertical axis.

14. Apparatus (1) according to one or more of the preceding claims, **characterized in that** said first rotation means (11) comprise at least a turnable joint (11) placed in between the moving portion (10b) of said second actuator device (10) and said grip means (3).

15. Apparatus (I) according to one or more of the claims from 2 to 14, **characterized in that** at least one between said first and second stop elements (4, 5) comprises at least a plate (4, 5) with a contact surface positionable on a portion of said wheel (R).

16. Apparatus (1) according to claim 15, **characterized in that** said plate (4, 5) comprises at least a protruding element (12) which extends substantially at right angles with respect to said contact surface and which is suitable for securing said wheel (R) when said first and second stop elements (4, 5) are arranged in said second configuration.

## Patentansprüche

1. Vorrichtung (1) zum Heben und Positionieren von Fahrzeugrädern, einsetzbar insbesondere in Maschinen zum Anbringen und Abnehmen von Reifen, mit einer Tragkonstruktion (2) und einer Hebe- und Dreheinrichtung (3, 10, 11) zum Heben und Drehen eines Rades (R), die mit der Tragkonstruktion (2) verbunden und geeignet ist, das Rad (R) zwischen einer ersten Stellung, in der das Rad (R) im Wesentlichen vertikal nahe dem Boden angeordnet ist, und einer zweiten Stellung, in der das Rad (R) im Wesentlichen horizontal nahe der Befestigungseinrichtung (B) einer Maschine (A) zum Anbringen und Abnehmen von Reifen angeordnet ist, zu bewegen, bei der die Hebe- und Dreheinrichtung (3, 10, 11) eine Greifeinrichtung (3) aufweist, die geeignet ist, das Rad (R) zu ergreifen und während der Bewegung zwischen der ersten und der zweiten Stellung festzuhalten, und eine erste Dreheinrichtung (11) zum Drehen der Greifeinrichtung (3) um eine im Wesentlichen horizontale Achse aufweist, **dadurch gekennzeichnet, dass** die Hebe- und Dreheinrichtung (3, 10, 11) eine zweite Dreheinrichtung (10) zum Drehen der Greifeinrichtung (3) um eine im Wesentlichen vertikale Achse aufweist.

2. Vorrichtung (1) gemäß Anspruch 1, **dadurch gekennzeichnet, dass** die Greifeinrichtung (3) mindestens ein erstes Anhalteelement (4) und ein zweites Anhalteelement (5) aufweist, die geeignet sind, mit im Wesentlichen einander gegenüberliegenden Teilen der
Lauffläche des Reifens des Rades (R) in Kontakt gebracht zu werden.

3. Vorrichtung (1) gemäß Anspruch 2, **dadurch gekennzeichnet, dass** mindestens das erste oder das zweite Anhalteelement (4, 5) sich näher zu oder fort von dem jeweils anderen, ersten oder zweiten, Anhalteelement (4, 5) bewegt.

4. Vorrichtung (1) gemäß Anspruch 2 oder 3, **dadurch gekennzeichnet, dass** die Hebe- und Dreheinrichtung (3, 10, 11) eine erste Dreheinrichtung (11) zum Drehen des ersten und des zweiten Anhalteelements (4, 5) um eine im Wesentlichen horizontale Achse zwischen einer ersten Konfiguration, in der das erste und das zweite Anhalteelement (4, 5) auf einer im Wesentlichen vertikalen Ebene angeordnet sind, und einer zweiten Konfiguration, in der das erste und das zweite Anhalteelement (4, 5) auf einer im Wesentlichen horizontalen Ebene angeordnet sind, aufweist.

5. Vorrichtung (1) gemäß einem oder mehr der Ansprüche 2 bis 4, **dadurch gekennzeichnet, dass** die Hebe- und Dreheinrichtung (3, 10, 11) eine zweite Dreheinrichtung (10) zum Drehen des ersten und des zweiten Anhalteelements (4, 5) um eine im Wesentlichen vertikale Achse in der Nähe oder im Abstand von der Befestigungseinrichtung (B) der Maschine (A) zum Anbringen und Abnehmen von Reifen aufweist.

6. Vorrichtung (1) gemäß einem oder mehr der vorangegangenen Ansprüche, **dadurch gekennzeichnet, dass** die Hebe- und Dreheinrichtung (3, 10, 11) eine Bewegungseinrichtung (10) zum Bewegen der Greifeinrichtung (3) entlang einer im Wesentlichen vertikalen Richtung aufweist.

7. Vorrichtung (1) gemäß einem oder mehr der Ansprüche 2 bis 6, **dadurch gekennzeichnet, dass** die Hebe- und Dreheinrichtung (3, 10, 11) eine Bewegungseinrichtung (10) für das erste und das zweite Anhalteelement (4, 5) entlang einer im Wesentlichen vertikalen Richtung zwischen einer abgesenkten Stellung, in der mindestens das erste oder das zweite Anhalteelement (4, 5) nahe dem Boden angeordnet ist, und einer angehobenen Stellung, in der das erste und das zweite Anhalteelement (4, 5) im Wesentlichen auf der Höhe der Befestigungseinrichtung (B) der Maschine (A) zum Anbringen und Abnehmen von Reifen angeordnet ist, aufweist.

8. Vorrichtung (1) gemäß einem oder mehr der Ansprüche 2 bis 7, **dadurch gekennzeichnet, dass** die Greifeinrichtung (3) mindestens einen Arm (6, 7) aufweist, der um einen Schwenkpunkt (8) drehbar ist und ein freies Ende hat, welches das erste oder das zweite Anhalteelement (4, 5) trägt.

9. Vorrichtung (1) gemäß einem oder mehr der Ansprüche 2 bis 8, **dadurch gekennzeichnet, dass** die Greifeinrichtung (3) mindestens ein Paar Arme (6, 7) aufweist, die mit der Tragkonstruktion (2) verbunden sind und deren freie Enden das erste Anhalteelement (4) bzw. das zweite Anhalteelement (5) tragen, wobei mindestens einer der Arme (6, 7) um einen Schwenkpunkt (8) drehbar ist, um das erste oder das zweite Anhalteelement (4, 5) näher zum jeweils anderen, dem ersten oder dem zweiten, Anhalteelement (4, 5), und von diesem fort zu bewegen.

10. Vorrichtung (1) gemäß einem oder mehr der Ansprüche 2 bis 9, **dadurch gekennzeichnet, dass** die Greifeinrichtung (3) eine Stelleinrichtung (9) zum Bewegen mindestens des ersten oder des zweiten Anhalteelements (4, 5) näher zu und fort von dem jeweils anderen, dem ersten oder dem zweiten, Anhalteelement (4, 5), aufweist.

11. Vorrichtung (1) gemäß Anspruch 10, **dadurch gekennzeichnet, dass** die Stelleineinrichtung (9) mindestens eine erste Stellvorrichtung (9) aufweist, die mit mindestens einem der Arme (6, 7) verbunden ist.

12. Vorrichtung (1) gemäß einem oder mehr der vorangegangenen Ansprüche, **dadurch gekennzeichnet, dass** die Bewegungseinrichtung (10) mindestens eine zweite Stellvorrichtung (10) mit einem festen Teil (10a), der mit der Tragkonstruktion (2) verbunden ist, und einem beweglichen Teil (10b) aufweist, der einen Teil bildend mit der Greifeinrichtung (3) verbunden ist und in Bezug auf den festen Teil (10a) entlang der im Wesentlichen vertikalen Richtung gleitet.

13. Vorrichtung (1) gemäß Anspruch 12, **dadurch gekennzeichnet, dass** die zweite Stellvorrichtung (10) in Bezug auf den Tragkonstruktion (2) um die im Wesentlichen vertikale Achse axial drehbar ist.

14. Vorrichtung (1) gemäß einem oder mehr der vorangegangenen Ansprüche, **dadurch gekennzeichnet, dass** die erste Dreheinrichtung (11) mindestens ein drehbares Verbindungsstück (11) aufweist, das sich zwischen dem beweglichen Teil (10b) der zweiten Stellvorrichtung (10) und der Greifeinrichtung (3) befindet.

15. Vorrichtung (1) gemäß einem oder mehr der Ansprüche 2 bis 14, **dadurch gekennzeichnet, dass** mindestens das erste oder das zweite Anhalteelement (4, 5) mindestens eine Platte (4, 5) mit einer Kontaktfläche, die auf einem Teil des Rades (R) positionierbar ist, aufweist.

16. Vorrichtung (1) gemäß Anspruch 15, **dadurch gekennzeichnet, dass** die Platte (4, 5) mindestens ein vorspringendes Element (12) aufweist, das sich im Wesentlichen in rechten Winkeln in Bezug auf die Kontaktfläche erstreckt und geeignet ist, das Rad (R) festzuhalten, wenn das erste und das zweite Anhalteelement (4, 5) in der zweiten Konfiguration angeordnet sind.

## Revendications

1. Dispositif (1) pour le levage et le positionnement des roues de véhicule, utilisable en particulier dans les machines de montage et de démontage des pneus, comprenant une structure de support (2) et des moyens de levage et de rotation (3, 10, 11) pour le levage et la rotation d'une roue (R) qui sont associés à ladite structure de support (2) et aptes à déplacer ladite roue (R) entre une première position, dans laquelle ladite roue (R) est disposée sensiblement verticalement en proximité du sol, et une deuxième position dans laquelle ladite roue (R) est disposée sensiblement horizontalement en proximité de moyens de fixation (B) d'une machine (A) pour le montage et le démontage des pneus, où lesdits moyens de levage et de rotation (3, 10, 11) comprennent des moyens de préhension (3) aptes à la préhension de ladite roue (R) et à la fixer pendant le mouvement entre ladite première position et ladite deuxième position et comprennent des premiers moyens de rotation (11) pour faire tourner lesdits moyens de préhension (3) autour d'un axe sensiblement horizontal **caractérisé en ce que** lesdits moyens de levage et de rotation (3, 10, 11) comprennent des deuxièmes moyens de rotation (10) pour faire tourner lesdits moyens de préhension (3) autour d'un axe sensiblement vertical.

2. Dispositif (1) selon la revendication 1, **caractérisé en ce que** lesdits moyens de préhension (3) comprennent au moins un premier élément d'arrêt (4) et un deuxième élément d'arrêt (5) qui sont aptes à être placés en contact avec des portions sensiblement opposées de la bande de roulement du pneu de ladite roue (R).

3. Dispositif (1) selon la revendication 2, **caractérisé en ce que** au moins un entre lesdits premier et deuxième élément d'arrêt (4, 5) se rapproche et s'éloigne par rapport à l'autre desdits premier et deuxième élément d'arrêt (4, 5).

4. Dispositif (1) selon les revendications 2 ou 3, **caractérisé en ce que** lesdits moyens de levage et de rotation (3, 10, 11) comprennent des premiers moyens de rotation (11) pour faire tourner lesdits premier et deuxième élément d'arrêt (4, 5) autour d'un axe sensiblement horizontal, entre une première configuration, dans laquelle le premier et le deuxième élément d'arrêt (4, 5) sont disposés sur un plan sensiblement vertical, et une deuxième configuration, dans laquelle lesdits premier et deuxième élément d'arrêt (4, 5) sont disposés sur un plan sensiblement horizontal.

5. Dispositif (1) selon une ou plusieurs des revendications de la 2 à la 4, **caractérisé en ce que** lesdits moyens de levage et de rotation (3, 10, 11) comprennent des deuxièmes moyens de rotation (10) pour faire tourner lesdits premier et deuxième élément d'arrêt (4, 5) autour d'un axe sensiblement vertical, en se rapprochant et en s'éloignant par rapport auxdits moyens de fixation (B) de la machine (A) pour le montage et le démontage des pneus.

6. Dispositif (1) selon une ou plusieurs des revendications précédentes, **caractérisé en ce que** lesdits moyens de levage et de rotation (3, 10, 11) comprennent des moyens de déplacement (10) pour déplacer lesdits moyens de préhension (3) le long d'une direction sensiblement verticale.

7. Dispositif (1) selon une ou plusieurs des revendications de la 2 à la 6, **caractérisé en ce que** lesdits moyens de levage et de rotation (3, 10, 11) comprennent des moyens de déplacement (10) desdits premier et deuxième élément d'arrêt (4, 5) le long d'une direction sensiblement verticale, entre une position abaissée, dans laquelle au moins un entre lesdits premier et deuxième élément d'arrêt (4, 5) est disposé près du sol, et une position relevée, dans laquelle lesdits premier et deuxième élément d'arrêt (4, 5) sont disposés sensiblement à la hauteur desdits moyens de fixation (B) de la machine (A) pour le montage et le démontage des pneus.

8. Dispositif (1) selon une ou plusieurs des revendications de la 2 à la 7, **caractérisé en ce que** lesdits moyens de préhension (3) comprennent au moins un bras (6, 7) pivotant autour d'un point d'articulation (8) et avec une extrémité libre pourvue d'un entre lesdits premier et deuxième élément d'arrêt (4, 5).

9. Dispositif (1) selon une ou plusieurs des revendications da la 2 à la 8, **caractérisé en ce que** lesdits moyens de préhension (3) comprennent au moins une paire de bras (6, 7) associés à ladite structure de support (2) et avec les extrémités libres pourvues, respectivement, dudit premier élément d'arrêt (4) et dudit deuxième élément d'arrêt (5), au moins un desdits bras (6, 7) étant pivotant autour d'un point d'articulation (8) de façon à rapprocher et éloigner un entre lesdits premier et deuxième élément d'arrêt (4, 5) par rapport à l'autre desdits premier et deuxième élément d'arrêt (4, 5).

10. Dispositif (1) selon une ou plusieurs des revendications de la 2 à la 9, **caractérisé en ce que** lesdits moyens de préhension (3) comprennent des moyens d'actionnement (9) pour rapprocher et éloigner au moins un desdits premier et deuxième élément d'arrêt (4, 5) par rapport à l'autre desdits premier et deuxième élément d'arrêt (4, 5).

11. Dispositif (1) selon la revendication 10, **caractérisé en ce que** lesdits moyens d'actionnement (9) comprennent au moins un premier dispositif d'actionnement (9) associé à au moins un desdits bras (6, 7).

12. Dispositif (1) selon une ou plusieurs des revendications précédentes, **caractérisé en ce que** lesdits moyens de déplacement (10) comprennent au moins un deuxième dispositif actionneur (10) pourvu d'une portion fixe (10a) associée à ladite structure de support (2) et d'une portion mobile (10b) associée de manière intégrale avec lesdits moyens de préhension (3) et coulissante sur ladite portion fixe (10a) le long de ladite direction sensiblement verticale.

13. Dispositif (1) selon la revendication 12, **caractérisé en ce que** ledit deuxième dispositif actionneur (10) est axialement orientable par rapport à ladite structure de support (2) autour dudit axe sensiblement vertical.

14. Dispositif (1) selon une ou plusieurs des revendications précédentes, **caractérisé en ce que** lesdits premiers moyens de rotation (11) comprennent au moins un joint pivotant (11) placé entre la partie mobile (10b) dudit deuxième dispositif actionneur (10) et lesdits moyens de préhension (3).

15. Dispositif (1) selon une ou plusieurs des revendications de la 2 à la 14, **caractérisé en ce que** au moins un entre lesdits premier et deuxième élément d'arrêt (4, 5) comprend au moins une plaque (4, 5) avec une surface de contact positionnable sur une portion de ladite roue (R).

16. Dispositif (1) selon la revendication 15, **caractérisé en ce que** ladite plaque (4, 5) comprend au moins un élément en saillie (12) qui s'étend sensiblement à angle droit par rapport à ladite surface de contact et qui est apte à assurer ladite roue (R) lorsque lesdits premier et deuxième élément d'arrêt (4, 5) sont disposés dans ladite deuxième configuration.
